# EUROPÄISCHE PATENTSCHRIFT

(11) **EP 0 495 947 B1**
(45) Veröffentlichungstag und Bekanntmachung des Hinweises auf die Patenterteilung: **24.05.1995**
(21) Anmeldenummer: 91914093.9
(22) Anmeldetag: 01.08.1991
(51) Int. Cl.: B65F 1/14

(54) **IDENTIFIKATIONSEINHEIT FÜR MÜLLBEHÄLTER**
IDENTIFICATION UNIT FOR RUBBISH CONTAINERS
UNITE D'IDENTIFICATION DE CONTENEURS DE DECHETS

(30) Priorität: 14.08.1990 DE 9011787 U
(43) Veröffentlichungstag der Anmeldung: 29.07.1992
(73) Patentinhaber: Fritz Schäfer Gesellschaft mit beschränkter Haftung, D-57290 Neunkirchen (DE)
(72) Erfinder: SCHÄFER, Gerhard, D-57290 Neunkirchen (DE)
(74) Vertreter: Müller, Gerd, Dipl.-Ing.
(86) Internationale Anmeldenummer: EP9101445
(87) Internationale Veröffentlichungsnummer: WO9203361

(56) Entgegenhaltungen:
- DE-A- 3 332 059
- DE-U- 8 612 623

## Beschreibung

Die Erfindung betrifft eine Identifikationseinheit für Müllbehälter, die mittels Entleerungsvorrichtungen bzw. sogenannte Schüttungen in Sammelfahrzeuge entleerbar sowie zur Gewichtsbestimmung des darin enthaltenen Mülls jeweils vor und nach dem Entleerungsvorgang auf der Entleerungsvorrichtung bzw. Schüttung wägbar sind, wobei der Müllbehälter einen in einer Aufnahme allseitig eingeschlossenen Kennungs-Sensor trägt, welcher mit einem der Entleerungsvorrichtung bzw. Schüttung zugeordneten, bordeigenen Identifikationssystem des Sammelfahrzeuges in Korrespondenz tritt.

Für die Müllentsorgung sind bereits Verfahren und Vorrichtungen zum gewichtsmäßigen Erfassen von Müll, insbesondere Haus- und Industriemüll, vorgeschlagen worden, die nicht nur eine genaue gewichtsmäßige Erfassung des im jeweiligen Müllbehälter enthaltenen Mülls ermöglichen, sondern es auch zulassen, die betreffenden Müllmengen dem jeweiligen Verursacher zuzuordnen und dann eine gewichtsbezogene Gebührenberechnung sicherstellen.

Wahrend nämlich pauschalierte Müllentsorgungsgebühren Bürgern und Betrieben keinen Anreiz zur Verringerung der Müllmengen bieten, kann durch gewichtsbezogene Berechnung der Müllentsorgungsgebühren besser auf eine Verminderung der anfallenden Müllmengen hingewirkt werden.

Insbesondere lassen sich auf diese Art und Weise die Verursacher eher dazu anhalten, eine Sortierung des anfallenden Mülls vorzunehmen, so daß eine getrennte Sammlung von biologischem Müll, recyclingfähigem Müll und Deponiemüll vorgenommen wird. Wenn dann die Gebührenberechnung für die unterschiedlichen Müllarten auf entsprechend unterschiedlichen Gebühreneinheiten beruht, läßt sich über die anfallenden Müllentsorgungsgebühren die tatsächliche Müllentsorgung optimieren.

Eine Identifikationseinheit der gattungsgemäßen Art ist bereits Gegenstand des DE-U1-86 12 623. In diesem Falle ist dabei die Identifikationseinheit unter dem Versteifungskragen bzw. dem Schüttungseingriff in einer Aufnahme angeordnet, welche in die Wandung des eigentlichen Müllgefäßes eingeformt ist.

Nach der Erfassung des Müllbehälters mittels der Entleerungsvorrichtung bzw. Schüttung des Sammelfahrzeuges liegt in diesem Falle das fahrzeugseitige Erkennungsorgan vor dem Kennungssensor an der Müllgefäßwandung. Da die Entleerungsvorrichtungen bzw. Schüttungen des Sammelfahrzeuges während jedes Entleerungsvorgangs einem relativ rauhen Betrieb unterliegen, kann es im Falle der bekannten Anordnung der Identifikationseinheit leicht vorkommen, daß der Kennungs-Sensor mit großer Kraft gegen das fahrzeugseitige Erkennungsorgan gedrückt und dadurch beschädigt wird. Das hat dann zur Folge, daß der Müllbehälter für die Zusammenarbeit mit den Sammelfahrzeugen unbrauchbar wird, weil ein beschädigter Kennungs-Sensor über das zugeordnete Erkennungsorgan den Antrieb der Entleerungsvorrichtung bzw. Schüttung nicht mehr auslösen kann.

Es kommt daher in jedem Falle entscheidend darauf an, daß die Identifikationseinheit am Müllbehälter eine Anordnung erhält, die nicht nur eine einwandfreie Korrespondenz mit dem bordeigenen Identifikationssystem des Sammelfahrzeuges gewährleistet, sondern die zugleich auch robust im Dauereinsatz ist.

Nach der Erfindung wird diese Zielsetzung mit den Merkmalen des Anspruchs 1 erreicht.

Der Versteifungskragen bzw. Schüttungseingriff ist ein funktionsnotwendiges Element der Müllbehälter, weil diese mit dem bordeigenen Entleerungsvorrichtungen bzw. Schüttungen des Sammelfahrzeuges in Wechselwirkung treten. Zu diesem Zweck haben Versteifungskragen bzw. Schüttungseingriff auch eine robuste und formstabile Auslegung und können deshalb zur dauerhaft sicheren Unterbringung des Kennungs-Sensors mitbenutzt werden.

Es hat sich dabei bewährt, wenn der Kennungs-Sensor stoßgesichert, z.B. gepolstert mit allseitigem Abstand gegenüber den umschließenden Wandungen, in der Aufnahme untergebracht ist.

Bewährt hat es sich auch, wenn die Aufnahme aus einer topf- oder wannenförmigen Einformung im Versteifungskragen bzw. Schüttungseingriff besteht, die durch einen Deckel verschließbar ist. Die Aufnahme läßt sich auf diese Art und Weise nämlich einfach innerhalb bzw. zwischen der Verrippung des Versteifungskragens bzw. Schüttungseingriffs im Spritzwerkzeug für den Müllbehälter ausformen.

Der nach dem Einsetzen des Kennungs-Sensors zum Verschließen der Aufnahme dienende Deckel läßt sich durch Verschweißung, Verklebung, Verschraubung oder Vernietung am Versteifungskragen bzw. Schüttungseingriff festlegen, und zwar unabhängig davon, ob die Öffnung der topf- oder wannenförmigen Einformung und damit der diese verschließende Deckel an der Unterseite, der Oberseite oder der Umfangsseite des Versteifungskragens bzw. Schüttungseingriffs liegt.

Es ist bei der Erfindung auch durchaus möglich, den Kennungs-Sensor und/oder den dessen Aufnahme verschließenden Deckel durch eine Schnapp-, Rast- oder Klippsvorrichtung am Versteifungskragen bzw. Schüttungseingriff des Müllbehälters festzulegen.

Der Kennungs-Sensor kann aber auch in den Versteifungskragen bzw. Schüttungseingriff des als Kunststoff-Spritzgießteil gefertigen Müllbehälters unmittelbar als Einlegeteil fest eingeformt werden.

Schließlich liegt es aber auch noch im Rahmen der Erfindung, den Kennungs-Sensor und/oder den Deckel mit Gewinde auszustatten, über das er in einem Gegengewinde am Versteifungskragen bzw. Schüttungseingriff verschraubbar ist.

In jedem Einbau- bzw. Anordnungsfall für den Kennungs-Sensor kommt es wesentlich darauf an, daß dieser in der Aufnahme am Versteifungskragen bzw. Schüttungseingriff gegen unbefugten Fremdeingriff geschützt fixiert ist, so daß er sich nur entfernen läßt, indem er selbst, seine Aufnahme und/oder der diese verschließende Deckel zerstört oder beschädigt wird. Zur Erläuterung von Ausführungsbeispielen des Gegenstandes der Erfindung dienen Zeichnungen. Dabei zeigen:
- Figur 1: in räumlicher Ansichtdarstellung einen für das Zusammenwirken mit der bordeigenen Entleerungsvorrichtung bzw. Schüttung eines Sammelfahrzeuges ausgelegten Müllbehälter,
- Figur 2: etwa in natürlicher Größe den in Fig. 1 mit II gekennzeichneten Ausschnittbereich eines Müllbehälters mit erfindungsgemäß zugeordneter Identifikationseinrichtung,
- Figur 3: die in Fig. 2 gezeigte Einbau-Anordnung der Identifikationseinheit in Pfeilrichtung III, also von unten gesehen,
- Figur 4: eine der Fig. 2 entsprechende Darstellung mit in abgewandelter Anordnung eingebauter Identifikationseinheit,
- Figur 5: den Ausschnittbereich eines Müllbehälters nach Fig. 4 in Pfeilrichtung V, also von oben gesehen,
- Figur 6: wiederum den in Fig. 1 der Zeichnung mit II gekennzeichneten Ausschnittbereich eines Müllbehälters bei wieder anderer Unterbringung der Identifikationseinheit
- Figur 7: teils im Schnitt und teils in Ansicht entsprechend der Linie VII-VII die Anordnung nach Fig. 6, während die
- Figuren 8 bis 11: im Schnitt verschiedene andere Unterbringungsmöglichkeiten des als Identifikationseinheit dienenden Kennungs-Sensors im Versteifungskragen bzw. Schüttungseingriff des Müllbehälters wiedergeben.

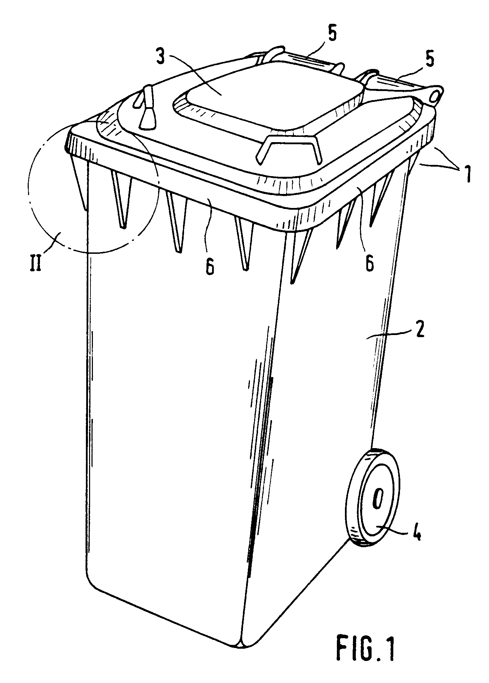

In Fig. 1 der Zeichnung ist ein Müllbehälter 1 in Form einer sogenannten Großmülltonne zu sehen, bei dem das eigentlichen Müllgefäß 2 oben durch einen Klappdeckel 3 verschließbar ist. Unten ist das Müllgefäß 2 mit zwei in der Nähe seiner Hinterkante gelagerten Laufrädern 4 ausgestattet, von denen jedoch nur eines zu sehen ist.

In die Scharnierverbindung zwischen dem Klappdeckel 3 und dem Müllgefäß 2 sind noch zwei Handgriffe 5 integriert, welche die Möglichkeit bieten, den gesamten Müllbehälter 1 mit Hilfe der Laufräder 4 bei Bedarf auf einfache Weise zu verfahren.

Ein wesentliches Ausgestaltungsmerkmal des Müllbehälters 1 liegt darin, daß am oberen Ende seines Müllgefäßes ein Versteifungskragen bzw. Schüttungseingriff 6 vorgesehen ist. Dieser Versteifungskragen bzw. Schüttungseingriff 6 dient dabei in erster Linie dem Zusammenwirken des Müllbehälters mit der Entleerungsvorrichtung bzw. Schüttung eines Müll-Sammelfahrzeuges, welche in der Regel als sogenannte Hub-Kipp-Vorrichtung ausgeführt bzw. wirksam ist.

Die Entleerungsvorrichtung bzw. Schüttung des Müll-Sammelfahrzeuges erfaßt nämlich den Müllbehälter 1 am Versteifungskragen bzw. Schüttungseingriff 6 seines Müllgefäßes 2, um das den Entleerungszyklus bildende Anheben, Kippen und Absenken zu ermöglichen.

Es tritt nun immer häufiger die Forderung auf, während des Entleerungszyklus für die Müllbehälter 1 in das Sammelfahrzeug nacheinander eine Brutto- und Tarawägung durchzuführen, um hierdurch das jeweilige Netto-Gewicht des im betreffenden Müllbehälter 1 angefallenen Mülls zu ermitteln. Anstelle der bisher üblichen, pauschalierten Müllentsorgungsgebühren sollen nämlich in Zukunft gewichtsbezogene Müllentsorgungsgebühren in Rechnung gestellt werden, um hierdurch die Verursachung zu einer Minderung der anfallenden Müllmengen zu veranlassen.

Zur Durchführung einer solchen, gewichtsabhängigen Berechnung der Müllentsorgungsgebühren besteht die Notwendigkeit, einerseits die Sammelfahrzeuge nicht nur mit einem Wägesystem für die Abfallsammlung auszustatten, sondern sie darüber hinaus auch noch mit einem Identifikationssystem für die Müllbehälter auszurüsten. Voraussetzung für die Funktionsfähigkeit des Identifikationssystemes ist dabei, daß jeder einzelne Müllbehälter mit einer Identifikationseinheit ausgestattet ist, welche es erst ermöglicht über das Identifikationssystem des Sammelfahrzeuges dessen Wägesystem für die Abfallsammlung zu aktivieren und gleichzeitig die mit diesem Wägesystem ausgestattete Entleerungsvorrichtung bzw. Schüttung in Betrieb zu setzen.

Die Identifikationseinheit muß dabei dem Müllbehälter so zugeordnet werden, daß sie bei dessen üblicher Handhabung mit dem Identifikationssystem des Sammelfahrzeuges ohne weiteres in Korrespondenz treten kann. Sie muß aber auch so vorgesehen werden, daß sie sich nicht ohne weiteres vom Müllgefäß entfernen bzw. trennen läßt. Schließlich muß die Identifikationseinheit aber auch so vorgesehen werden, daß sie gegen die bei ständiger Benutzung auftretenden Beanspruchungen unempfindlich bleibt und eine Änderung ihrer Codierung nicht ohne weiteres zuläßt.

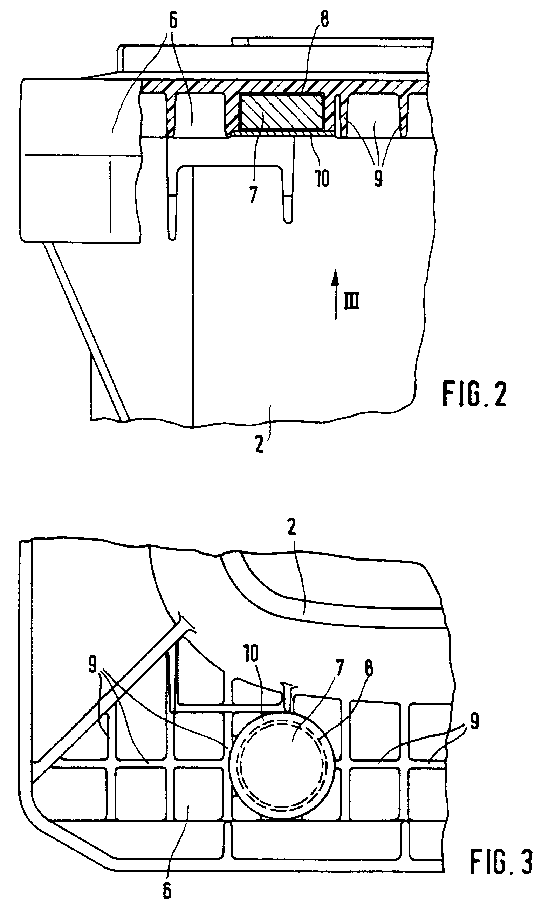

Aus den Fig. 2 bis 7 der Zeichnung ist ersichtlich, daß die Identifikationseinheit für jeden einzelnen Müllbehälter 1 einen Kennungs-Sensor 7 aufweist, der in einer Aufnahme 8 des Versteifungskragens bzw. Schüttungseingriffs 6 am eigentlichen Müllgefäß 2 untergebracht ist. Dabei ist wichtig, daß der Kennungs-Sensor stoßgesichert, z.B. gepolstert oder mit allseitigem Abstand von den umschließenden Wandungen der Aufnahme 8 in dieser untergebracht wird und darin allseitig eingeschlossen ist.

Die Aufnahme 8 kann aus einer topf- oder wannenförmigen Einformung bestehen, die im Versteifungskragen bzw. Schüttungseingriff 6 zwischen den Versteifungsrippen 9 liegt, die der zweckentsprechenden Stabilisierung des Versteifungskragens bzw. Schüttungseingriffs 6 dienlich sind.

Nach dem Einsetzen des Kennungs-Sensors 7 in die Aufnahme 8 kann die Aufnahme 8 durch Aufsetzen eines Deckels 10 verschlossen werden. Dabei läßt sich der Deckel durch Verschweißung, Verklebung, Verschraubung oder Vernietung am Versteifungskragen bzw. Schüttungseingriff 6 so festlegen, daß eine Entfernung bzw. ein Austausch des Kennungs-Sensors 7 nur unter Beschädigung des Deckels 10 und/oder des Versteifungskragens bzw. Schüttungseingiffs 6 vorgenommen werden kann.

In den Fig. 2 und 3 der Zeichnung ist eine Ausbildung des Versteifungskragens bzw. Schüttungseingriffs 6 zu sehen, bei der die Aufnahme 8 von einer topf- oder wannenförmigen Einformung gebildet wird, die ihre Öffnung an der Unterseite des Versteifungskragens bzw. Schüttungseingriffs 6 hat, also durch einen von unten aufgesetzten Deckel verschlossen werden muß. Dabei ist der Deckel 10 mit dem Öffnungsrand der Aufnahme 8 rundum durch Verklebung und/oder Verschweißung fest verbunden.

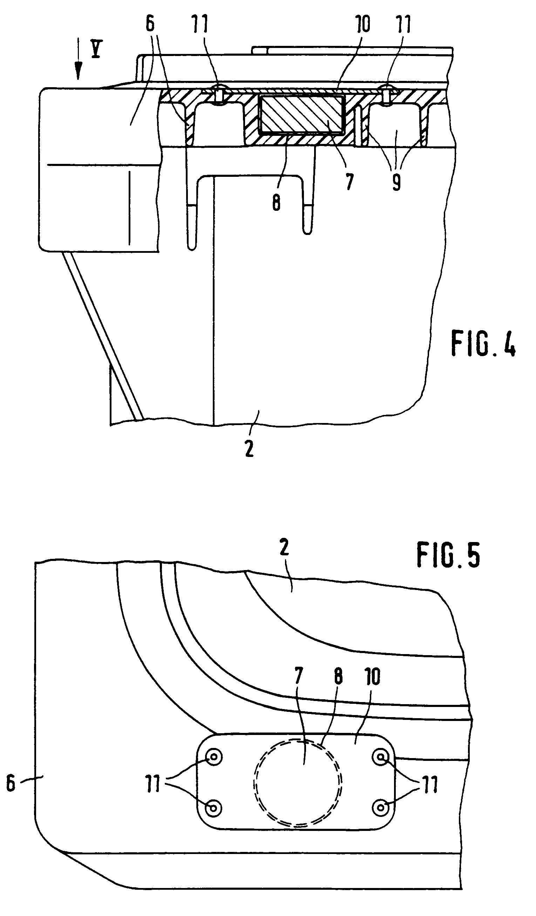

Beim Ausführungsbeispiel nach den Fig. 4 und 5 ist die als Aufnahme 8 für den Kennungs-Sensor 7 dienende, topf- oder wannenförmige Einformung 8 mit nach oben gerichteter Öffnung in den Versteifungskragen bzw. Schüttungseingriff 6 des Müllgefäßes 2 eingeformt. Sie wird deshalb auch durch einen von oben aufgesetzten Deckel 10 verschlossen. In diesem Falle ist dabei der Deckel 10 mit dem Versteifungskragen bzw. Schüttungseingriff 6 durch Vernietung 11 fest verbunden.

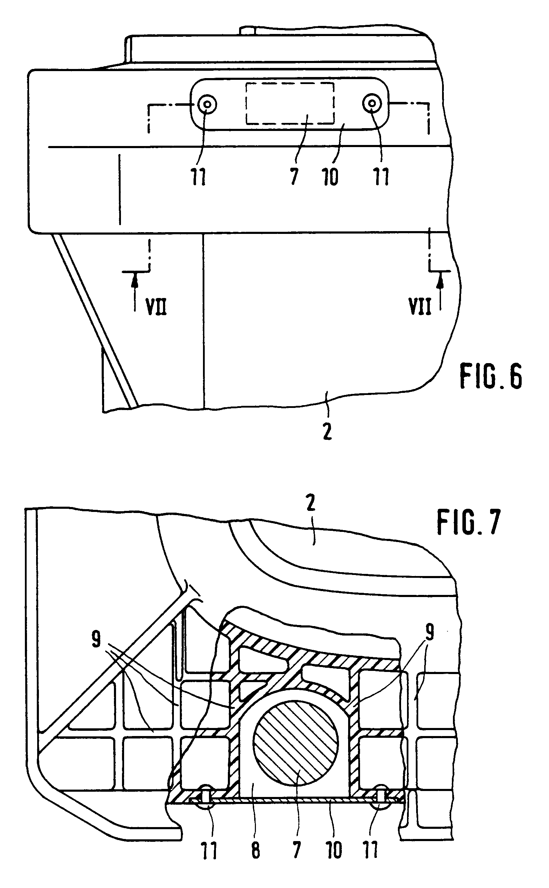

In den Fig. 6 und 7 der Zeichnung ist schließlich ein Ausführungsbeispiel zu sehen, bei der die Aufnahme 8 für den Kennungs-Sensor 7 im Versteifungskragen bzw. Schüttungseingriff 6 zur Seite hin offen ausgeführt ist. Der Deckel 10 wird hier also seitlich an die Umfangsfläche des Versteifungskragens bzw. Schüttungseingriffs 6 gesetzt, um die Aufnahme 8 nach dem Einsetzen des Kennungs-Sensors zu verschließen. Auch hier sind dabei zur Befestigung des Deckels 10 Vernietungen 11 vorgesehen.

In Fig. 7 der Zeichnung ist noch ersichtlich, daß der Kennungs-Sensor 7 sich mit allseitigem Abstand von den Wandungen in die Aufnahme 8 einsetzen läßt, vorzugsweise derart, daß er darin gepolstert, bspw. unter Vermittlung von Schaumstoffbeilagen oder auch schwimmend bzw. durch Federelemente gestützt, gehalten werden kann. Auf diese Art und Weise läßt sich dann eine optimale Stoßsicherung des Kennungs-Sensors 7 erhalten, obwohl schon die Versteifungsrippe 9 des Versteifungskragens bzw. Schüttungseingriffs 6 einen optimalen Schutz gegen Beschädigung bieten kann.

Die Anordnung des Kennungs-Sensors innerhalb des Versteifungskragens bzw. Schüttungseingriffs 6 am Müllgefäß 2 des Müllbehälters 1 hat den Vorteil, daß er mit einem Abfrageempfänger des fahrzeugseitigen Identifikationssystems in Korrespondenz treten kann, welcher unmittelbar auf dem Greifer der Entleerungsvorrichtung bzw. Schüttung montiert ist, welcher mit dem Versteifungskragen bzw. Schüttungseingriff zusammenwirkt.

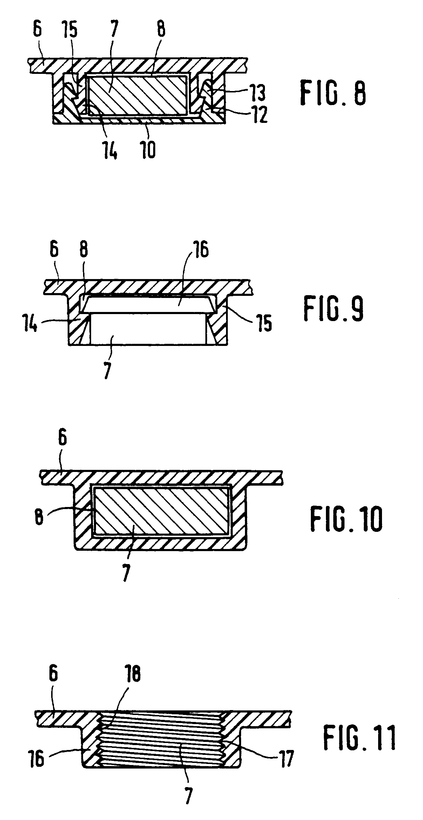

In Figur 8 der Zeichnung ist gezeigt, daß die Aufnahme 8 für den Kennungs-Sensor 7 im Versteifungskragen bzw. Schüttunseingriff 6 des Müllgefäßes 2 auch dadurch gesichert werden kann, daß ein Deckel 10 verwendet wird, der einen angeformten Hals mit einem ringförmig verlaufenden, hinterschnittenen Hakenrand 13 aufweist. Dieser Hakenrand 13 des Deckels 10 sitzt dabei in Wirkverbindung mit einem komplementären Hakenrand 14 an einem Kragen 15, welcher die Aufnahme 8 für den Kennungs-Sensor 7 ringförmig umschließt. Die Hakenränder 13 und 14 wirken dabei als Schnapp-, Rast- oder Klippsvorrichtung zusammen, die sich nur Zerstörend des Deckels 10 seines Halses 12 oder des Kragens 15 wieder lösen läßt.

Die Figur 9 der Zeichnung macht deutlich, daß auch der Kennungs-Sensor 7 selbst mit einem hinterschnittenen Bund 16 ausgestattet werden kann, welcher mit dem hinterschnittenen Rand 14 des Kragens 15 unter Bildung einer Schnapp-, Rast- oder Klippsvorrichtung zusammenwirkt. Auch in diesem Falle läßt sich der Kennungs-Sensor 7 nur entfernen, indem der Kragen 15 und/oder dessen hinterschnittener Rand 14 zerstört oder beschädigt wird. Wenn das Müllgefäß 2 - üblicherweise -als Kunststoff-Spritzgießformteil gefertigt ist, besteht natürlich auch die Möglichkeit, den Kennungs-Sensor 7 in den Versteifungskragen bzw. Schüttungseingriff 6 als Einlegeteil fest einzuformen, wie das deutlich in Figur 10 der Zeichnung wiedergegeben ist.

In Figur 11 ist angedeutet, daß der Versteifungskragen bzw. Schüttungseingriff 6 eines Müllgefäßes 2 auch eine Tülle 16 mit Innengewinde 17 enthalten kann, in der sich der Kennungs-Sensor 7 mit einem passenden Außengewinde 18 verankern läßt. Denkbar wäre es aber auch den Kennungs-Sensor 7 ähnlich der Figur 11 in eine nur einseitig offene Aufnahme 8 durch Zusammenwirken von Gewinde 17 und Gegengewinde 18 einzuschrauben und zusätzlich noch einen Deckel 10 vorzusehen, der dann ebenfalls mit Hilfe von Gewinde und Gegengewinde fixiert werden kann.

Selbstverständlich ist es im Falle der Figuren 8, 9 und 11 auch noch möglich, die zusammenwirkenden Funktionsteile durch Verklebung oder Verschweißung untereinander zu verbinden.

## Patentansprüche

1. Identifikationseinheit für Müllbehälter (1), die mittels einer Entleerungsvorrichtung bzw. Schüttung in Sammelfahrzeuge entleerbar sowie zur Gewichtsbestimmung des darin enthaltenen Mülls jeweils vor und nach dem Entleerungsvorgang auf der Entleerungsvorrichtung bzw. Schüttung wägbar sind, wobei der Müllbehälter (1) einen in einer Aufnahme allseitig eingeschlossenen Kennungs-Sensor (7) trägt, welcher mit einem der Entleerungsvorrichtung bzw. Schüttung zugeordneten, bordeigenen Identifikationssystem des Sammelfahrzeuges in Korrespondenz tritt,
**dadurch gekennzeichnet,**
daß sich die Aufnahme (8) im Versteifungskragen bzw. Schüttungseingriff (6) des Müllbehälters (1, 2) zwischen Versteigungsrippen (9) befindet.

2. Identifikationseinheit nach Anspruch 1,
**dadurch gekennzeichnet,**
daß der Kennungs-Sensor (7) stoßgesichert z. B. gepolstert mit allseitigem Abstand, d. h. schwimmend gegenüber den umschließenden Wandungen in der Aufnahme (8) untergebracht ist.

3. Identifikationseinheit nach einem der Ansprüche 1 und 2,
**dadurch gekennzeichnet,**
daß die Aufnahme (8) aus einer topf- oder wannenförmigen Einformung im Versteifungskragen bzw. Schüttungseingriff (6) besteht, die durch einen Deckel (10) verschließbar ist.

4. Identifikationseinheit nach Anspruch 3,
**dadurch gekennzeichnet,**
daß der Deckel (10) durch Verschweißung, Verklebung, Verschraubung oder Vernietung (11) am Versteifungskragen bzw. Schüttungseingriff (6) festlegbar ist.

5. Identifikationseinheit nach Anspruch 3 oder 4,
**dadurch gekennzeichnet,**
daß die Öffnung der topf- oder wannenförmigen Einformung (8) und damit der diese verschließende Deckel (10) an der Unterseite (Fig. 2 und 3), an der Oberseite (Fig. 4 und 5) oder an der Umfangseite (Fig. 6 und 7) des Versteifungskragens bzw. Schüttungseingriffs (6) liegt.

6. Identifikationseinheit nach einem der Ansprüche 1 bis 3,
**dadurch gekennzeichnet,**
daß der Kennungs-Sensor (7) und/oder der dessen Aufnahme (8) verschließende Decken (10) durch eine Schnapp-, Rast- oder Klipsvorrichtung (13, 14 bzw. 16, 14) am Versteifungskragen bzw. Schüttungseingriff (6) festlegbar ist (Fig. 8 und 9).

7. Identifikationseinheit nach Anspruch 1,
**dadurch gekennzeichnet,**
daß der Kennungs-Sensor (7) in den Versteifungskragen bzw. Schüttungseingriff (6) des als Kunststoff-Spritzgießformteil gefertigten Müllbehälters (2) als Einlegeteil fest eingeformt ist (Fig. 10).

8. Identifikationseinheit nach einem der Ansprüche 1 bis 3,
**dadurch gekennzeichnet,**
daß der Kennungs-Sensor (7) und/oder der Deckel (10) Gewinde (18) aufweist, über das er in einem Gegengewinde (17) am Versteifungskragen bzw. Schüttungseingriff (6) verankerbar ist (Fig. 11).

## Claims

1. Identification unit for rubbish containers (1) which can be emptied by an emptying device or by a tipping device into rubbish collection vehicles and can be weighed on the emptying device or tipping device to determine the weight of the rubbish contained therein before and after emptying, wherein the rubbish container (1) carries in a seat a fully enclosed recognition sensor (7) which enters into correspondence with an identification system on board the rubbish collection vehicle, the identification system being associated with the emptying device or the tipping device, characterised in that the seat (8) is situated in a stiffening lip or tipping grip (6) of the rubbish container (1, 2) between stiffening ribs (9).

2. Identification unit according to claim 1, characterised in that the recognition sensor (7) is situated with respect to the surrounding walls in the seat (8) in a shockproof manner, e.g. cushioned with a spacing on all sides, i.e. floatingly.

3. Identification unit according to any one of claims 1 and 2, characterised in that the seat (8) is formed by a pot-shaped or trough-shaped recess in the stiffening lip or tipping grip (6), the recess being closable by a cover (10).

4. Identification unit according to claim 3, characterised in that the cover (10) may be firmly fixed on the stiffening lip or tipping grip (6) by welding, adhesion, screwing or rivetting (11).

5. Identification unit according to claim 3 or 4, characterised in that the opening of the pot-shaped or trough-shaped recess (8), and thereby of the cover (10) which closes it, is situated on the bottom (Fig. 2 and 3), on the top side (Fig. 4 and 5) or on the periphery (Fig. 6 and 7) of the stiffening lip or tipping grip (6).

6. Identification unit according to any one of claims 1 to 3, characterised in that the recognition sensor (7), and/or the cover (10) which closes its seat (8), may be firmly fixed on the stiffening lip or tipping grip (6) by a snap-in means, arresting means or a clip-on means (13, 14 or 16, 14) (Fig. 8 and 9).

7. Identification unit according to claim 1, characterised in that the recognition sensor (7) is firmly formed as an insertion piece in the stiffening lip or tipping grip (6) of the rubbish container (2) made as a moulded part made of plastics by injection moulding (Fig. 10).

8. Identification unit according to any one of claims 1 to 3, characterised in that the recognition sensor (7) and/or the cover (10) has a thread (18) by means of which it may be anchored in a counterthread (17) on the stiffening lip or tipping grip (6) (Fig. 11).

## Revendications

1. Unité d'identification pour conteneur à déchets (1), qui peuvent être vidés dans des véhicules de collecte au moyen d'un dispositif de vidage ou de déversement, et qui peuvent être pesés en vue de déterminer le poids des déchets qui y sont contenus, à chaque fois avant et après l'opération de vidage, sur le dispositif de vidage ou de déversement, le conteneur à déchets (1) portant un capteur d'identification (7) enfermé de tous côtés dans un logement, ce capteur d'identification venant en correspondance avec un système d'identification à bord du véhicule de collecte et associé au dispositif de vidage ou de déversement,
caractérisée en ce que
le logement (8) est situé dans la collerette de renfort, ou l'organe de saisie de déversement (6) du conteneur à déchets (1, 2) entre des nervures de renfort (9).

2. Unité d'identification selon la revendication 1, caractérisée en ce que le capteur d'identification (7) est logé dans le logement (8) en étant protégé contre les chocs, par exemple en étant rembourré, avec un écartement de tous les côtés, c'est-à-dire de façon "flottante" par rapport aux parois entourantes.

3. Unité d'identification selon l'une ou l'autre des revendications 1 et 2, caractérisée en ce que le logement (8) est constitué par une conformation en forme de godet ou de bassin dans la collerette de renfort ou l'organe de saisie de déversement (6), cette conformation pouvant être fermée par un couvercle (10).

4. Unité d'identification selon la revendication 3, caractérisée en ce que le couvercle (10) est susceptible d'être fixé sur la collerette de renfort, ou l'organe de saisie de déversement (6) par soudage, collage, vissage ou rivetage (11).

5. Unité d'identification selon l'une ou l'autre des revendications 3 et 4, caractérisée en ce que l'ouverture de la conformation (8) en forme de godet ou de bassin, et par conséquent le couvercle (10) qui la referme est située à la face inférieure (figs. 2 et 3), à la face supérieure (figs. 4 et 5) ou à la face périphérique (figs. 6 et 7) de la collerette de renfort ou de l'organe de saisie de déversement (6).

6. Unité d'identification selon l'une des revendications 1 à 3, caractérisée en ce que le capteur d'identification (7) et/ou le couvercle (10) qui referme son logement (8) est susceptible d'être fixé sur la collerette de renfort ou l'organe de saisie de déversement (6) par un dispositif à déclic, à encliquetage ou à enclenchement (13, 14 ; 16, 14) (figs. 8 et 9).

7. Unité d'identification selon la revendication 1, caractérisé en ce que le capteur d'identification (7) est formé de façon solidaire sous la forme d'un insert (fig. 10) dans la collerette de renfort ou l'organe de saisie de déversement (6) du récipient à déchets (2) réalisé sous la forme d'une pièce en matière plastique moulée par injection.

8. Unité d'identification selon l'une des revendications 1 à 3, caractérisée en ce que le capteur d'identification (7) et/ou le couvercle (10) comporte un filetage (18), au moyen duquel il peut être ancré dans un contre-filetage (17) sur la collerette de renfort ou l'organe de saisie de déversement (6) (fig. 11).
